(19) Europäisches Patentamt
European Patent Office
Office européen des brevets

(11) **EP 4 592 058 A1**

(12) **EUROPEAN PATENT APPLICATION**
published in accordance with Art. 153(4) EPC

(43) Date of publication:
**30.07.2025 Bulletin 2025/31**

(21) Application number: **23868259.5**

(22) Date of filing: **21.09.2023**

(51) International Patent Classification (IPC):
**B29C 64/118** *(2017.01)*    **B29C 64/321** *(2017.01)*
**B29C 64/343** *(2017.01)*    **B29C 64/393** *(2017.01)*
**B33Y 10/00** *(2015.01)*    **B33Y 50/02** *(2015.01)*
**B33Y 70/00** *(2020.01)*    **B33Y 70/10** *(2020.01)*
**B33Y 80/00** *(2015.01)*

(52) Cooperative Patent Classification (CPC):
**B29C 64/118; B29C 64/321; B29C 64/343;**
**B29C 64/393; B33Y 10/00; B33Y 50/02;**
**B33Y 70/00; B33Y 70/10; B33Y 80/00**

(86) International application number:
**PCT/JP2023/034288**

(87) International publication number:
**WO 2024/063138 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.09.2022 JP 2022151152**

(71) Applicant: **POLYPLASTICS CO., LTD.**
**Tokyo 108-8280 (JP)**

(72) Inventors:
• **TAKAHASHI, Masahiko**
**Fuji-shi, Shizuoka 416-8533 (JP)**
• **KUSAGAYA, Mitsuharu**
**Fuji-shi, Shizuoka 416-8533 (JP)**

(74) Representative: **Winter, Brandl - Partnerschaft mbB**
**Alois-Steinecker-Straße 22**
**85354 Freising (DE)**

(54) **THREE-DIMENSIONAL SHAPED OBJECT AND METHOD FOR PRODUCING THREE-DIMENSIONAL SHAPED OBJECT**

(57) Provided are a three-dimensional molded article in which a crystalline thermoplastic resin is used and which has excellent mechanical characteristics, and a method for production thereof. The three-dimensional molded article is obtained by fused filament fabrication with a filament containing a crystalline thermoplastic resin, and the void ratio in the three-dimensional molded article is 5% or less. The method for producing the three-dimensional molded article involves forming the three-dimensional molded article by using a 3D printer to deposit layers of a filament containing the crystalline thermoplastic resin by fused filament fabrication. A setting value for a discharge amount input to the 3D printer or to 3D printer data processing software should preferably be a value greater than 100%.

[FIG. 5B]

[B]

EP 4 592 058 A1

Description

TECHNICAL FIELD

The present disclosure relates to a three-dimensional molded article and a method for producing a three-dimensional molded article.

BACKGROUND ART

3D printers have rapidly spread in recent years because they can fabricate three-dimensional molded articles without using molds or large-scale melting equipment. Fused filament fabrication (FFF) method, stereolithography (STL), selective laser sintering (SLS), etc. are known as molding techniques with 3D printers. Fused filament fabrication is a method for forming a three-dimensional molded article by thermally melting and depositing layers of a thermoplastic resin (for example, Patent Documents 1 and 2), and is likely to spread widely, not only for industrial applications, but also for personal use, due to the low cost of the equipment. Polyacetal resins, which are crystalline thermoplastic resins, have excellent mechanical characteristics and are therefore useful if they can be used as molding materials for 3D printers.

Patent Document 1: JP 2021-172084 A

Patent Document 2: JP 2019-131762 A

SUMMARY OF INVENTION

When a crystalline thermoplastic resin such as a polyacetal resin is used as a shaping material in a 3D printer based on the fused filament fabrication method, the obtained three-dimensional molded articles tend to have mechanical characteristics such as, for example, bending properties, that are inferior to those of injection-molded articles.
The present invention addresses the problem of providing a three-dimensional molded article in which a crystalline thermoplastic resin is used and which has excellent mechanical characteristics, and a method for production thereof.
The present invention includes the embodiments indicated below.

[1] A three-dimensional molded article obtained by fused filament fabrication with a filament containing a crystalline thermoplastic resin, wherein:
a void ratio in the three-dimensional molded article is 5% or less, where the void ratio is represented by a value obtained by performing image analysis of a 10 mm × 10 mm region, in one direction, of cross-sectional data obtained by performing a **CT** scan, by X-rays, on all or a portion of the three-dimensional molded article to measure an area ($A_{resin}$) of regions in which a resin component is present and an area ($A_{void}$) of regions in which voids are present, and calculating a ratio [$A_{void}/A_{resin}$] (%) of the area of the regions in which voids are present to the area of the regions in which the resin component is present, or by a value obtained by performing data analysis of a 10 mm × 10 mm × 10 mm region in spatial data obtained by performing a **CT** scan, by X-rays, on all or a portion of the three-dimensional molded article to measure a volume ($V_{resin}$) of regions in which the resin component is present and a volume ($V_{void}$) of regions in which voids are present, and calculating a ratio [$V_{void}/V_{resin}$] (%) of the volume of the regions in which voids are present to the volume of the regions in which the resin component is present.

[2] The three-dimensional molded article according to [1], wherein the void ratio in the three-dimensional molded article is 2% or less.

[3] The three-dimensional molded article according to [1] or [2], wherein the crystalline thermoplastic resin includes one or more resins selected from the group consisting of polyacetal resins, polyethylene resins, polypropylene resins, polyethylene terephthalate resins, polybutylene terephthalate resins, and polyamide resins.

[4] The three-dimensional molded article according to any one of [1] to [3], wherein the three-dimensional molded article contains an inorganic or organic filler.

[5] A method for producing the three-dimensional molded article according to [1], wherein:
the method for producing the three-dimensional molded article involves forming the three-dimensional molded article by using a 3D printer to deposit layers of a filament containing a crystalline thermoplastic resin by fused filament fabrication.

[6] The method for producing the three-dimensional molded article according to [5], wherein:

forming the three-dimensional molded article involves

the 3D printer receiving an input of a setting value for a discharge amount of the melted crystalline thermoplastic resin from a nozzle, or

the 3D printer operating based on slice data generated by 3D printer data processing software to which a setting value for a discharge amount of the melted crystalline thermoplastic resin from a nozzle can be input; and

the setting value of the discharge amount input to the 3D printer or to the 3D printer data processing software is a value greater than 100%.

[7] The method for producing the three-dimensional molded article according to [5] or [6], wherein:

forming the three-dimensional molded article involves

the 3D printer receiving an input of a setting value for a filament diameter, or

the 3D printer operating based on slice data generated by 3D printer data processing software to which a setting value for a filament diameter can be input; and

the setting value of the filament diameter input to the 3D printer or to the 3D printer data processing software is a value smaller than a mean filament diameter of the filament.

[8] **The** method for producing the three-dimensional molded article according to any one of [5] to [7], wherein:

forming the three-dimensional molded article involves

the 3D printer receiving an input of a setting value for a discharge amount of a melted crystalline thermoplastic resin from a nozzle, or

the 3D printer operating based on slice data generated by 3D printer data processing software to which a setting value for a discharge amount of a melted crystalline thermoplastic resin from a nozzle can be input, and

preparing a value of a density ($g/cm^3$) of the filament prior to forming the three-dimensional molded article, and preparing a calibration curve indicating a correlation between setting values of the discharge amount and density ($g/cm^3$) in reference three-dimensional shaped samples for which setting values of the discharge amount are known; and

the setting value of the discharge amount input to the 3D printer or to the 3D printer data processing software is a setting value of the discharge amount corresponding to a point, on the calibration curve, at which the density of the reference three-dimensional shaped samples becomes 95-100% with respect to the density ($g/cm^3$) of the filament.

[9] **The** method for producing the three-dimensional molded article according to any one of [5] to [8], wherein:

forming the three-dimensional molded article involves

the 3D printer receiving an input of a setting value for a filament diameter, or

the 3D printer operating based on slice data generated by 3D printer data processing software to which a setting value for a filament diameter can be input, and

preparing a value of a density ($g/cm^3$) of the filament prior to forming the three-dimensional molded article, and preparing a calibration curve indicating a correlation between setting values of the filament diameter and density ($g/cm^3$)

in reference three-dimensional shaped samples for which setting values of the filament diameter are known; and

the setting value of the filament diameter input to the 3D printer or to the 3D printer data processing software is a setting value of the filament diameter corresponding to a point, on the calibration curve, at which the density of the reference three-dimensional shaped samples becomes 95-100% with respect to the density (g/cm$^3$) of the filament.

According to the present invention, it is possible to provide a three-dimensional molded article in which a crystalline thermoplastic resin is used and which has excellent mechanical characteristics, and a method for production thereof.

## BRIEF DESCRIPTION OF DRAWINGS

FIG. 1 is a conceptual diagram illustrating an example of the configuration of a 3D printer.

FIG. 2 is an explanatory diagram regarding a shaping method for a three-dimensional molded article using the 3D printer.

FIG. 3 shows a calibration curve indicating the correlation between setting values and density (g/cm$^3$) in reference three-dimensional shaped samples for which the setting values are known, relating to a filament used in Example 1.

FIG. 4 shows a calibration curve indicating the correlation between setting values and density (g/cm$^3$) in reference three-dimensional shaped samples for which the setting values are known, relating to a filament used in Example 2.

FIG. 5A-C are CT scan images of a three-dimensional molded article obtained in Example 1. FIG. 5A is cross-sectional data for a 10 mm $\times$ 4 mm face, FIG. 5B is cross-sectional data for an 80 mm $\times$ 40 mm face, and FIG. 5C is cross-sectional data for an 80 mm $\times$ 10 mm face.

FIG. 6A-C are CT scan images of a three-dimensional molded article obtained in Comparative Example 1. FIG. 6A is cross-sectional data for a 10 mm $\times$ 4 mm face, FIG. 6B is cross-sectional data for an 80 mm $\times$ 40 mm face, and FIG. 6C is cross-sectional data for an 80 mm $\times$ 10 mm face.

FIG. 7A-C are schematic explanatory diagrams regarding a bending test.

## DESCRIPTION OF EMBODIMENTS

Hereinafter, an embodiment of the present disclosure will be described in detail. However, the scope of the present disclosure is not limited to the embodiment to be described here and various modifications can be made within a range not departing from the spirit of the present disclosure. Additionally, when multiple upper limit values and lower limit values are described for specific parameters, any of the upper limit values and lower limit values among these upper limit values and lower limit values may be combined to define a suitable numerical range. Additionally, the upper limit values and/or lower limit values of the numerical ranges described in the present disclosure may be replaced with numerical values that are within those numerical ranges and that are indicated in the examples. The expression "X-Y", which indicates a numerical range, has the meaning "equal to or more than X and equal to or less than Y". When a specific description regarding an embodiment also applies to another embodiment, there may be cases in which that description is omitted for the other embodiment.

[Three-dimensional molded article]

The three-dimensional molded article according to the present embodiment is a three-dimensional molded article obtained by fused filament fabrication with a filament containing a crystalline thermoplastic resin (hereinafter also referred to simply as a "filament"). In other words, it is a three-dimensional molded article obtained by depositing layers of a filament containing a crystalline thermoplastic resin, as a material, by fused filament fabrication. Whether a three-dimensional molded article has been obtained by fused filament fabrication can be determined by checking for shaping lines (drawing lines) and layer deposition marks when observing the surface of the three-dimensional molded article by eye or with a stereo microscope. The thickness of the shaping lines (drawing lines) is not limited and may, for example, be

100-1000 μm.

(Void ratio)

In the three-dimensional molded article, the void ratio is 5% or less, preferably 2% or less, and more preferably 1% or less. Due to the void ratio being 5%, a three-dimensional molded article with excellent mechanical characteristics can be obtained. Conventionally, among three-dimensional molded articles obtained by fused filament fabrication with a filament containing a crystalline thermoplastic resin, those with a void ratio of 5% or less are not known.

A "void" refers to a defect other than a space intentionally formed in a three-dimensional molded article to be obtained. An intentionally formed space refers to a space formed inside a molded article based on a setting value generally called the fill rate (infill), and can be observed in three-dimensional data. In one embodiment, a void may be a region surrounded by the three-dimensional molded article in all directions. In one embodiment, a void may be a defect that occurs between adjacent shaping lines (drawing lines) in a three-dimensional molded article.

The void ratio can be represented by (i) or (ii) below.

(i) A value obtained by performing image analysis of a 10 mm × 10 mm region, in one direction, of cross-sectional data obtained by performing a CT scan, by X-rays, on all or a portion of a three-dimensional molded article to measure the area ($A_{resin}$) of regions in which a resin component is present and the area ($A_{void}$) of regions in which voids are present, and calculating the ratio [$A_{void}/A_{resin}$] (%) of the area of the regions in which voids are present to the area of the regions in which the resin component is present.

(ii) A value obtained by performing data analysis of a 10 mm × 10 mm × 10 mm region in spatial data obtained by performing a CT scan, by X-rays, on all or a portion of the three-dimensional molded article to measure the volume ($V_{resin}$) of regions in which the resin component is present and the volume ($V_{void}$) of regions in which voids are present, and calculating the ratio [$V_{void}/V_{resin}$] (%) of the volume of the regions in which voids are present to the volume of the regions in which the resin component is present.

A "CT scan" is captured by using an X-ray CT device composed of an X-ray tube and an X-ray detector. The range of the three-dimensional molded article that is subjected to the CT scan may be all or a portion thereof. In one embodiment, if the range of the CT scan is a portion of the three-dimensional molded article, it may, for example, be a range from 1-100 mm × 1-100 mm, for example, a 10 mm × 10 mm range, at an arbitrary location on the three-dimensional molded article. In one embodiment, the range of the three-dimensional molded article that is subjected to the CT scan is preferably a range not including a space that is intentionally formed inside the three-dimensional molded article from the aspect of facilitating the measurement of the area and/or the volume of the regions in which voids are present. A "10 mm × 10 mm region" and a "10 mm × 10 mm × 10 mm region" refer to sizes within a field-of-view region used for computation.

In one embodiment, the cross-sectional data and/or the spatial data that is subjected to image analysis or to data analysis may be a portion of the cross-sectional data and/or the spatial data obtained by performing a CT scan. In one embodiment, the cross-sectional data and/or the spatial data that is analyzed may be, among the cross-sectional data and/or the spatial data obtained by performing a CT scan, cross-sectional data and/or spatial data including a surface (or an area near a surface) of a three-dimensional molded article, and may be cross-sectional data and/or spatial data including a region that will form the center (or be near the center) in a direction inward from one surface of the three-dimensional molded article. By analyzing cross-sectional data and/or spatial data including a surface (or an area near a surface) of the three-dimensional molded article, the void ratio at the surface of the three-dimensional molded article can be measured. By analyzing cross-sectional data and/or spatial data including a region that will form the center (or be near the center) in a direction inward from one surface of the three-dimensional molded article, the void ratio in the interior of the three-dimensional molded article can be measured.

The region that is subjected to image analysis is a 10 mm × 10 mm region in one direction in cross-sectional data obtained by performing a **CT** scan. **In** one embodiment, the region that is subjected to image analysis may be a region along any one direction in the cross-sectional data that is subjected to image analysis, and for example, may be a region along the layer deposition direction in the fused filament fabrication, or may be a region along a direction perpendicular to the layer deposition direction in the fused filament fabrication. **In** one embodiment, the region that is subjected to image analysis may be a region along a height direction, a region along a planar direction, or a region along a thickness direction of the three-dimensional molded article.

**In** one embodiment, image analyses may be performed in 10 mm × 10 mm regions along each direction in cross-sectional data in one or more directions, in two or more directions, or in three directions in cross-sectional data obtained by performing a **CT** scan, and the void ratio ([$A_{void}/A_{resin}$] (%)) may be computed for each region. **In** one embodiment, in the case in which an image analysis is performed on image data in two or more directions, the void ratio is 5% or less in the region along at least one direction that is subjected to image analysis, the void ratio is preferably 5% or less in each of the regions along each of the two or more directions that are subjected to image analysis, and the void ratio is more preferably 5% or less in each of the regions along all of the directions that are subjected to image analysis.

**The** spatial data that is subjected to data analysis is from a 10 mm × 10 mm × 10 mm region in cross-sectional data obtained by performing a **CT** scan. **In** one embodiment, the region that is subjected to data analysis may be such that data analyses are performed in 10 mm × 10 mm × 10 mm regions in spatial data obtained by performing a **CT** scan, and the void ratio ($[V_{void}/V_{resin}]$ (%)) may be computed for each region. **In** one embodiment, in the case in which a data analysis is performed on spatial data from two or more locations, the void ratio is 5% or less in at least one location that is subjected to data analysis, the void ratio is preferably 5% or less in each of two or more locations that are subjected to data analysis, and the void ratio is more preferably 5% or less in all of the directions that are subjected to data analysis.

**The** "regions in which a resin component is present" are regions in which a resin component containing the crystalline thermoplastic resin constituting the filament is present. **The** regions in which the resin component is present may be regions that are observed as regions with high brightness values (CT values) (such as white or gray) in cross-sectional data or spatial data obtained by performing a **CT** scan. **In** one embodiment, the regions in which the resin component is present may be regions in which the **CT** value is - 400 to 1000 in cross-sectional data or spatial data obtained by performing a **CT** scan.

**The** "regions in which voids are present" are regions in which defects other than spaces that are intentionally formed in a three-dimensional molded article are present. **The** regions in which voids are present may be regions surrounded, in all directions, by regions in which the resin component containing the crystalline thermoplastic resin is present. **In** one embodiment, the regions in which voids are present may be regions in which there are defects that occur between two or more adjacent shaping lines (drawing lines). **In** one embodiment, when collating cross-sectional data and/or spatial data obtained by performing a **CT** scan with three-dimensional data for a three-dimensional molded article, the regions indicated to be spaces in the three-dimensional data can be removed from the regions in which voids are present. **The** regions in which voids are present may be regions observed as regions with low **CT** values (normally black) in cross-sectional data and/or spatial data obtained by performing a **CT** scan. **In** one embodiment, the regions in which voids are present may be regions in which the **CT** value is -400 to 1000 in cross-sectional data and/or spatial data obtained by performing a **CT** scan.

**The** values ($A_{resin}$, $A_{void}$) of the areas of the respective regions can be measured by means of image processing software. For example, $A_{resin}$ and $A_{void}$ can be measured by binarization using image processing software (the open-source software "ImageJ").

The values ($V_{resin}$, $V_{void}$) of the volumes of the respective regions can be calculated by analyzing three-dimensional images reconstructed on software based on multiple two-dimensional images obtained by X-ray CT scans. For example, $V_{resin}$ and $V_{void}$ can be calculated by analyzing three-dimensional images reconstructed by using image processing software ("Molcer Plus", manufactured by White Rabbit Corp.).

As a method for setting the void ratio to be 5% or less, there is a method of optimizing a setting value for the discharge amount of a melted crystalline thermoplastic resin from a nozzle input to a 3D printer or to 3D printer data processing software when using a 3D printer to shape an object by fused filament fabrication. For example, there is a method of setting the discharge amount setting value input to the 3D printer or to the 3D printer data processing software to a value greater than a reference defined value (for example, 100% in terms of flow value). By setting the discharge amount setting value input to the 3D printer or to the 3D printer data processing software to be a value greater than a reference defined value, the void ratio in the molded article can easily be set to be 5% or less. Additionally, for example, there is a method of optimizing the discharge amount setting value input to the 3D printer or to the 3D printer data processing software by using a calibration curve indicating the correlation between discharge amount setting values for filament diameters and density ($g/cm^3$) in reference three-dimensional shaped samples for which the setting values are known. Specifically, there is a method of measuring the density ($g/cm^3$) of a filament to be used in advance and preparing a calibration curve indicating the correlation between discharge amount setting values and density ($g/cm^3$) in reference three-dimensional shaped samples for which the setting values are known, and setting the discharge amount setting value input to the 3D printer or to the 3D printer data processing software to a setting value at a point on the calibration curve at which the density becomes a value that is approximately the same as the density ($g/cm^3$) of the filament. **The** void ratio in a molded article can easily be set to be 5% or less by using the calibration curve to optimize the discharge amount setting value input to the 3D printer or to the 3D printer data processing software.

**In** another embodiment, as a method for setting the void ratio to be 5% or less, there is a method of optimizing a setting value for the filament diameter input to the 3D printer. For example, there is a method of setting the filament diameter setting value input to the 3D printer to a value smaller than the mean filament diameter (actual measurement value) of a filament to be used. By setting the filament diameter setting value input to the 3D printer to a value smaller than the mean filament diameter (actual measurement value), the void ratio in the molded article can easily be set to be 5% or less. Additionally, for example, there is a method of optimizing the filament diameter setting value input to the 3D printer by using a calibration curve indicating the correlation between filament diameter setting values and density ($g/cm^3$) in

reference three-dimensional shaped samples for which the setting values are known. Specifically, there is a method of measuring the density (g/cm$^3$) of a filament to be used in advance and preparing a calibration curve indicating the correlation between filament diameter setting values and density (g/cm$^3$) in reference three-dimensional shaped samples for which the setting values are known, and setting the filament diameter setting value input to the 3D printer to a setting value at a point on the calibration curve at which the density becomes a value that is approximately the same as the density (g/cm$^3$) of the filament. **The** void ratio in a molded article can easily be set to be 5% or less by using the calibration curve to optimize the filament diameter setting value input to the 3D printer.

(Crystalline thermoplastic resin)

**The** crystalline thermoplastic resin preferably includes one or more crystalline thermoplastic resins selected from the group consisting of polyacetal resins, polyethylene resins, polypropylene resins, polyethylene terephthalate resins, polybutylene terephthalate resins, and polyamide resins, and more preferably includes a polyacetal resin. **The** crystalline thermoplastic resin may be included as one type alone or may be included as two or more types. **In** one embodiment, the crystalline thermoplastic resin preferably contains a polyacetal resin and may be configured to be composed of a polyacetal resin.

**The** polyacetal resin may be a polyacetal homopolymer or may be a polyacetal copolymer. **In** one embodiment, from the aspect of balancing mechanical properties with thermal properties, a polyacetal copolymer is preferably included. **The** polyacetal resin may have not only linear molecules, but also molecules having branched or crosslinked structures, and may be a known modified polyoxymethylene in which other organic groups have been introduced. **The** polyacetal resin may include one type alone or may include two or more types.

A polyacetal homopolymer is a polymer having only oxymethylene units (-CH$_2$O-) in the main chain. A polyacetal copolymer is a copolymer resin including oxymethylene units (-CH$_2$O-) as the main constituent units, and further including comonomer units other than the oxymethylene units. **The** "main constituent units" refer to monomer units for which the percentage among all constituent units (100 mass%) constituting the polyacetal copolymer exceeds 50 mass%, and is preferably 70 mass% or more.

The comonomer units included in the polyacetal copolymer may be of one type or may be of two or more types. The comonomer units are preferably oxyalkylene units with two or more carbon atoms. The thermal stability tends to be good due to the comonomer units being oxyalkylene units with two or more carbon atoms. Additionally, the comonomer units are more preferably oxyalkylene units of at least one type selected from among oxyethylene groups, oxypropylene groups, and oxytetramethylene groups, and particularly preferably include oxyethylene groups. In the case in which oxyethylene units are included as comonomer units, the percentage of oxyethylene units among all comonomer units (100 mass%) is preferably 90 mass% or more and 100 mass% or less, and more preferably 95 mass% or more and 100 mass% or less.

The polyacetal copolymer may be any one of a random copolymer, a block copolymer, or a graft copolymer. From the aspect of thermal stability, a random copolymer is preferable.

In one embodiment, the crystalline thermoplastic resin includes a polyacetal copolymer, and the polyacetal copolymer may include preferably 1.0 mass% or more and 6.0 mass% or less, more preferably 1.5 mass% or more and 5.5 mass% or less, even more preferably 2.0 mass% or more and 5.0 mass% or less, and particularly preferably 2.5 mass% or more and 4.5 mass% or less of comonomer units among all constituent units (100 mass%). By including a polyacetal copolymer that preferably includes 1.0 mass% or more and 6.0 mass% or less of comonomer units, a three-dimensional molded article with better dimensional stability can be obtained. The percentage of comonomer units in the polyacetal copolymer can be calculated by a $^1$H-NMR method. For example, a sample material is dissolved in deuterated hexafluoroisopropanol so that the concentration is 5 mass%, and a sample is fabricated. This sample can be analyzed by $^1$H-NMR and the percentage of comonomer units can be calculated by a method of determining the percentage of an integral associated with comonomer units (for example, the oxyalkylene units having two or more carbon atoms mentioned below) with respect to an integral associated with the peaks for all monomers in the polyacetal copolymer.

In one embodiment, the crystalline thermoplastic resin includes a polyacetal copolymer, and the comonomer units in the polyacetal copolymer preferably include oxyalkylene units with two or more carbon atoms, and more preferably include oxyalkylene units of at least one type selected from among oxyethylene groups, oxypropylene groups, and oxytetramethylene groups.

As polyethylene resins, there are, for example, high-density polyethylene resins, low-density polyethylene resins, linear low-density polyethylene resins, etc.

As polypropylene resins, there are, for example, not only propylene homopolymers, but also polypropylene copolymers, branched-chain polypropylenes, etc.

As polyethylene terephthalate resins, there are, for example, polyester resins mainly constituted by terephthalic acid or ester-formable derivatives (such as C$_{1-6}$ alkyl esters or acid halides) thereof as dicarboxylic acid components, and by ethylene glycol or ester-formable derivatives (such as acetylates) thereof as diol components.

As polybutylene terephthalate resins, there are, for example, polybutylene terephthalate resins obtained by polycondensation of dicarboxylic acid components containing terephthalic acid or ester-formable derivatives (such as $C_{1-6}$ alkyl esters or acid halides) thereof with glycol components containing at least alkylene glycol (1,4-butanediol) having four carbon atoms or ester-formable derivatives (such as acetylates) thereof. There are also homopolyesters (polybutylene terephthalate) and/or copolyesters (butylene terephthalate copolymers, polybutylene terephthalate copolyesters, or modified PBT resins) containing butylene terephthalate as the main component, etc.

As polyamide resins, there are, for example, polyamide 11 (PA11), polyamide 6 (PA6), polyamide 66 (PA66), polyamide 610 (PA610), polyamide 612 (PA612), polyamide 12 (PA12), polyamide 6T (PA6T), polyamide 6I, polyamide 9T, polyamide M5T, polyamide 1010 (PA1010), polyamide 1012 (PA1012), polyamide 10T, polyamide MXD6, polyamide 6T/66, polyamide 6T/6I, polyamide 6T/6I/66, polyamide 6T/2M-5T, polyamide 9T/2M-8T, etc.

The melt flow rate (MFR) of the crystalline thermoplastic resin with a 2.16 kg load and in a temperature range from the melting point Tm2 (°C) to Tm2 + 30 °C should preferably be 1.0 g/10 min or more and 8.0 g/10 min or less, more preferably 1.2 g/10 min or more and 7.0 g/10 min or less, and even more preferably 1.4 g/10 min or more and 6.0 g/10 min or less. Due to the MFR being 1.0 g/10 min or more and 8.0 g/10 min or less, the shaping stability of the three-dimensional molded article becomes good. The MFR can be measured based on ISO 1133-1:2011 (condition D) under conditions with a load of 2.16 kg in a temperature range from the melting point Tm2 (°C) to Tm2 + 30 °C (for example, a temperature of 190 °C when the crystalline thermoplastic resin is a polyacetal resin).

The melting point Tm2 of the crystalline thermoplastic resin measured by a differential scanning calorimeter is preferably 160 °C or higher and 175 °C or lower, and more preferably 162 °C or higher and 170 °C or lower. Due to the melting point Tm2 being 160 °C or higher and 170 °C or lower, it becomes easy to stably shape the three-dimensional molded article. The melting point Tm2 refers to a temperature determined by a method based on JIS K-7121 (2012), wherein the crystalline thermoplastic resin is heated from 40 °C to 200 °C at a temperature increase rate of 20 °C/min (first run), is thereafter held at 200 °C for 5 minutes, is next cooled to 40 °C at a temperature decrease rate of 10 °C/min, is thereafter held at 40 °C for 5 minutes, and is reheated from 40 °C to 200 °C at a temperature increase rate of 10 °C/min (second run), the melting point Tm2 being the temperature of a peak top of an endothermic peak of the second run observed during the second run.

The crystallization temperature Tc of the crystalline thermoplastic resin measured with the differential scanning calorimeter is preferably 130 °C or higher and 155 °C or lower, and more preferably 135 °C or higher and 150 °C or lower. Due to the crystallization temperature Tc being 130 °C or higher and 155 °C or lower, the three-dimensional molded article can be shaped with good operability. The crystallization temperature Tc refers to a temperature determined by a method based on JIS K-7121 (2012), wherein the crystalline thermoplastic resin is heated from 40 °C to 200 °C at a temperature increase rate of 20 °C/min (first run), is thereafter held at 200 °C for 5 minutes, and is next cooled to 40 °C at a temperature decrease rate of 10 °C/min, the crystallization temperature Tc being the temperature of a peak top of an exothermic peak observed during the cooling.

In one embodiment, the crystalline thermoplastic resin content in the resin components constituting the three-dimensional molded article is preferably 50-100 mass%, more preferably 70-100 mass%, and may be 100 mass% of the total mass of all resin components. In the case in which a polyacetal resin is included as a crystalline thermoplastic resin, the polyacetal resin content in the resin components is preferably 50-100 mass%, and more preferably 70-100 mass% of the total mass of the resin components constituting the three-dimensional structure.
In one embodiment, the crystalline thermoplastic resin content in the three-dimensional molded article is preferably 50-100 mass%, and more preferably 70-100 mass% of the total mass of the three-dimensional molded article. In the case in which a polyacetal resin is included as a crystalline thermoplastic resin, the polyacetal resin content in the three-dimensional molded article is preferably 50-100 mass%, and more preferably 70-100 mass% of the total mass of the three-dimensional molded article.

(Other components)

The three-dimensional molded article may contain other components as needed. As such other components, there are fibrous, powdered, or flake-shaped inorganic or organic fillers, thermoplastic resins other than crystalline thermoplastic resins (other thermoplastic resins), etc. The three-dimensional molded article may include one type, or two or more types of common additives for thermoplastic resins such as, for example, anti-weather (photo) stabilizers, colorants such as dyes or pigments, lubricants, nucleating agents, mold release agents, anti-static agents, surfactants, etc. as needed.

(Inorganic or organic fillers)

In one embodiment, the three-dimensional molded article may include an inorganic or organic filler. As inorganic or organic fillers, there are, for example, powdered fillers with a mean particle diameter of 2 nm to 400 μm, more preferably

20 nm to 100 $\mu$m; flake-shaped fillers; fibrous fillers with a mean fiber length of 0.1-600 $\mu$m, preferably 1-300 $\mu$m, and a mean fiber diameter of 0.001-20 $\mu$m, preferably 0.01-15 $\mu$m; and the like. By including an inorganic or organic filler, a three-dimensional molded article with superior strength can be obtained. The mean particle diameter of the inorganic or organic filler refers to the particle diameter D50 at which the cumulative frequency becomes 50% for the volume-based arithmetic mean particle diameter determined by laser diffraction/scattering-type particle size distribution measurement. The mean particle diameter can be measured by using, for example, a laser diffraction/scattering-type particle size distribution measurement apparatus (product name LA-960, manufactured by HORIBA, Ltd.). The mean fiber length is the arithmetic mean of values obtained by measuring 500 fibers of a fibrous filler with an image measuring device (product name LUZEXFS, manufactured by Nikore CO., LTD.). The mean fiber diameter is the arithmetic mean of values obtained by measuring the longest straight-line distances in cross-sections orthogonal to the lengthwise directions of 500 fibers of a fibrous filler with an image measuring device (product name LUZEXFS, manufactured by Nikore CO., LTD.).

As powdered fillers, there are, for example, carbon black, graphite, silica, quartz powder, glass beads, glass balloons, glass powder, calcium silicate, aluminum silicate, kaolin, clay, diatomaceous earth, silicates such as wollastonite, metal oxides such as iron oxide, titanium oxide, zinc oxide, antimony trioxide, and alumina, metal carbonates such as calcium carbonate and magnesium carbonate, metal sulfates such as calcium sulfate and barium sulfate, and in addition thereto, ferrite, silicon carbide, silicon nitride, boron nitride, various types of metal powders, etc. These powdered fillers may be used as one type alone or as a combination of two or more types.

As fibrous fillers, there are, for example, fibers such as glass fibers, milled glass fibers, carbon fibers, asbestos fibers, silica fibers, silica/alumina fibers, alumina fibers, zirconia fibers, boron nitride fibers, silicon nitride fibers, boron fibers, potassium titanate fibers, silicate fibers such as wollastonite, magnesium sulfate fibers, aluminum borate fibers, and further thereto, inorganic fibrous substances such as fibrous materials composed of metals such as stainless steel, aluminum, titanium, copper, and brass. Particularly representative fibrous fillers are glass fibers. High-melting-point organic fibrous substances such as polyamides, fluororesins, polyester resins, and acrylic resins can also be used. These fibrous fillers may be used as one type alone or as a combination of two or more types.

As flake-shaped fillers, there are mica, glass flakes, talc, various types of metal foils, etc. These flake-shaped fillers may be used as one type alone or as a combination of two or more types.

In the case in which the three-dimensional molded article includes an inorganic or organic filler, the content thereof can be, for example, 0-30 parts by mass or can be 5-20 parts by mass with respect to 100 parts by mass of the crystalline thermoplastic resin. The inorganic or organic filler content can be, for example, 0-30 mass%, and can be 5-20 mass% of the total mass of the three-dimensional molded article.

(Three-dimensional molded article)

The three-dimensional molded article obtained by the present disclosure is excellent in terms of various types of mechanical characteristics including bending properties and tensile characteristics. In one embodiment, the flexural strength of the three-dimensional molded article measured in accordance with ISO178 can be 80% or more, or 85% or more of the flexural strength of a reference injection-molded article fabricated with the same materials. In a preferred embodiment, the flexural strength of the three-dimensional molded article measured in accordance with ISO178 can be a value higher than that of a reference injection-molded article.

In one embodiment, the flexural modulus of the three-dimensional molded article measured in accordance with ISO178 can be 80% or more, or 85% or more of the flexural modulus of a reference injection-molded article fabricated with the same materials. In a preferred embodiment, the flexural modulus of the three-dimensional molded article measured in accordance with ISO178 can be a value higher than the flexural modulus of a reference injection-molded article.

The flexural strength and the below-mentioned flexural modulus of the three-dimensional molded article are obtained by using test pieces fabricated by fused filament fabrication.

The dimensions and shape of the three-dimensional molded article are not limited, and may be dimensions and a shape in accordance with the intended application.

[Method for producing three-dimensional molded article]

The method for producing the three-dimensional molded article according to the present embodiment involves forming the three-dimensional molded article by using a 3D printer, and 3D printer data processing software, as needed, to deposit layers of a filament containing a crystalline thermoplastic resin by fused filament fabrication. The 3D printer is not limited, and a commercially available fused filament fabrication 3D printer can be used.

(Filament preparation step)

A "filament" is a solid material for three-dimensional molding. Filaments that are commonly used as materials for 3D printing have a continuous fibrous shape with a circular or substantially circular shape in a cross section orthogonal to the lengthwise direction of the filament.

The filament contains a crystalline thermoplastic resin. The type and contained amount of the crystalline thermoplastic resin, as well as the characteristics thereof, are the same as those described regarding the three-dimensional molded article above, and therefore descriptions thereof will be omitted here. The filament may include one type, or two or more types of crystalline thermoplastic resin. In one embodiment, the crystalline thermoplastic resin content in the filament is preferably 50-100 mass%, and more preferably 70-100 mass% with respect to the total mass of the filament. When a polyacetal resin is contained as the crystalline thermoplastic resin, the polyacetal resin content in the filament is preferably 50-100 mass%, and more preferably 70-100 mass% with respect to the total mass of the filament.

The filament may include other components as needed. As such other components, there are fibrous, powdered, and flake-shaped inorganic or organic fillers, thermoplastic resins other than the crystalline thermoplastic resin (other thermoplastic resins), etc. The three-dimensional molded article may include one type, or two or more types of common additives for thermoplastic resins such as, for example, anti-weather (photo) stabilizers, colorants such as dyes or pigments, lubricants, nucleating agents, mold release agents, anti-static agents, surfactants, etc. as needed.

Regarding examples, contained amounts, etc. of the inorganic or organic fillers and other thermoplastic resins, the descriptions regarding the other components that may be included in the three-dimensional molded article above similarly apply.

In one embodiment, the mean diameter of the filament (also referred to as the "mean filament diameter") is preferably 1-3 mm, more preferably 1-2.5 mm, and even more preferably 1.5-2 mm. By setting the mean filament diameter to 1-3 mm, the filament can be used as a material compliant with specifications for commercially available 3D printing equipment. The mean diameter of the filament is a value obtained by extracting a 5 m sample, randomly selecting 20 locations, measuring the diameters (or the longest linear distance on the cross-section) at those locations to the third decimal place using a micrometer, taking the arithmetic mean of the obtained values, and rounding the value to the third decimal place.

In one embodiment, the filament can be a wound body that is wound onto a core material. By providing the filament as a wound body, it can be easily mounted on a 3D printer, thereby further facilitating molding by the 3D printer.

From the aspect of facilitating stable three-dimensional shaping, the melting point Tm2 of the filament measured by a differential scanning calorimeter is preferably 160 °C or higher and 175 °C or lower, and more preferably 162 °C or higher and 173 °C or lower. The melting point Tm2 refers to a temperature determined by a method based on JIS K-7121 (2012), wherein the filament is heated from 40 °C to 200 °C at a temperature increase rate of 20 °C/min (first run), is thereafter held at 200 °C for 5 minutes, is next cooled to 40 °C at a temperature decrease rate of 10 °C/min, is thereafter held at 40 °C for 5 minutes, and is reheated from 40 °C to 200 °C at a temperature increase rate of 10 °C/min (second run), the melting point Tm2 being the temperature of a peak top of an endothermic peak of the second run observed during the second run.

From the aspect of facilitating stable three-dimensional shaping, the crystallization temperature Tc of the filament measured with the differential scanning calorimeter is preferably 130 °C or higher and 155 °C or lower, and more preferably 135 °C or higher and 150 °C or lower. The crystallization temperature Tc refers to a temperature determined by a method based on JIS K-7121 (2012), wherein the filament is heated from 40 °C to 200 °C at a temperature increase rate of 20 °C/min (first run), is thereafter held at 200 °C for 5 minutes, and is next cooled to 40 °C at a temperature decrease rate of 10 °C/min, the crystallization temperature Tc being the temperature of a peak top of an exothermic peak observed during the cooling.

The method for producing the filament is not limited, and the filament can be made by extruding the crystalline thermoplastic resin by means of an extruder, together with other components that may be contained as needed, cooling and solidifying an extruded strand, then winding the strand by means of a winder at a winding rate at which the diameter of the filament becomes a desired value.

In the method for producing the filament, the crystalline thermoplastic resin may be used as a single type alone, or may be used as a combination of two or more types.

(Three-dimensional molded article formation step)

In the three-dimensional molded article formation step, the filament including the crystalline thermoplastic resin is supplied to a 3D printer and deposited in layers by fused filament fabrication to form the three-dimensional molded article. Fused filament fabrication is a method for fabricating a three-dimensional molded article by discharging the melted filament in the form of a line from a discharge nozzle onto a molding stage to deposit layers of shaping lines (drawing lines) in the planar direction and in the height direction.

In conventional methods, after actually measuring the diameter (1.75 mm as a common nominal value) of the filament used as the material, this actual measurement value was input as a filament diameter setting value in a 3D printer or in 3D printer data processing software. Additionally, shaping was performed with the discharge amount basically at a setting value of 100%. However, when using a filament containing a crystalline thermoplastic resin, there was a problem in that the effects of contraction, etc. at the time of discharge from the nozzle could cause voids, which are defects (spaces) between the shaping lines, to form. Additionally, there was a problem in that the mechanical characteristics of the obtained three-dimensional molded article were greatly decreased in comparison with injection-molded articles. In the present embodiment, a three-dimensional molded article with excellent mechanical characteristics can be produced by adjusting the setting values input to the 3D printer or to 3D printer data processing software.

In one embodiment, the 3D printer is configured so that a setting value for the discharge amount of the melted crystalline thermoplastic resin from a nozzle can be input, or the 3D printer is configured to operate based on slice data generated by 3D printer data processing software to which a setting value for the discharge amount of the melted crystalline thermoplastic resin from a nozzle can be input. The discharge amount setting value input to the 3D printer or to the 3D printer data processing software should preferably be a value greater than 100%. That is, in this embodiment, the three-dimensional molded article formation step involves the 3D printer receiving an input of a setting value for the discharge amount of the melted crystalline thermoplastic resin from a nozzle, or the 3D printer operating based on slice data generated by 3D printer data processing software to which a setting value for the discharge amount of the melted crystalline thermoplastic resin from a nozzle can be input, and the setting value of the discharge amount input to the 3D printer or to the 3D printer data processing software preferably is a value greater than 100%. By inputting a value greater than 100% as the discharge amount setting value to the 3D printer or to the 3D printer data processing software, a three-dimensional molded article with excellent mechanical characteristics can be easily produced. In the obtained three-dimensional molded article, the formation of voids is suppressed.

The "3D printer data processing software" is software having the function of dividing (slicing) three-dimensional data into multiple layers to prepare slice data. The 3D printer data processing software is normally configured to allow shaping conditions of the 3D printer to be set and changed while previewing the slice data. The obtained slice data is converted to a language by which the 3D printer can operate and is sent to the 3D printer. The 3D printer operates based on the slice data that has been sent.

Additionally, in another embodiment, the 3D printer is configured so that a setting value for the filament diameter can be input, or the 3D printer is configured to operate based on slice data generated by 3D printer data processing software to which a setting value for the filament diameter can be input. The filament diameter setting value input to the 3D printer or to the 3D printer data processing software should preferably be a value smaller than the mean filament diameter (actual measurement value) of the filament used. That is, in this embodiment, the three-dimensional molded article formation step involves the 3D printer receiving an input of a setting value for the filament diameter, or the 3D printer operating based on slice data generated by 3D printer data processing software to which a setting value for the filament diameter can be input, and the setting value of the filament diameter input to the 3D printer or to the 3D printer data processing software preferably is a value smaller than the mean filament diameter of the filament.

By inputting a value smaller than the mean filament diameter (actual measurement value) to the 3D printer or to the 3D printer data processing software, a three-dimensional molded article with excellent mechanical characteristics can be easily produced. In the obtained three-dimensional molded article, the formation of voids is suppressed.

The "mean filament diameter" is a value obtained by extracting a 5 m sample, randomly selecting 20 locations, measuring the diameters (or the longest linear distance on the cross-section) at those locations to the third decimal place using a micrometer, taking the arithmetic mean of the obtained values, and rounding the value to the third decimal place.

In one embodiment, the discharge amount setting value input to the 3D printer or to the 3D printer data processing software may be greater than 100% and 150% or less, and may be greater than 100% and 125% or less.

In another embodiment, the filament diameter setting value input to the 3D printer or to the 3D printer data processing software may be a value that is 70-100% of the mean filament diameter of the filament used, and may be a value that is 80-100% of the mean filament diameter of the filament used.

The method for producing a three-dimensional molded article according to one embodiment involves the 3D printer being configured so that a setting value for the discharge amount of the melted crystalline thermoplastic resin from a nozzle can be input, or the 3D printer being configured to operate based on slice data generated by 3D printer data processing software to which a setting value for the discharge amount of the melted crystalline thermoplastic resin from a nozzle can be input, preparing a value of the density (g/cm$^3$) of the filament prior to forming the three-dimensional molded article, and preparing a calibration curve indicating the correlation (hereinafter referred to simply as a "calibration curve") between the setting values of the discharge amount and density (g/cm$^3$) in reference three-dimensional shaped samples for which the setting values of the discharge amount are known (hereinafter, the feature of preparing a value of the density (g/cm$^3$) of the filament and the feature of preparing a calibration curve will also be referred to collectively as the "calibration curve preparation step"). The setting value of the discharge amount input to the 3D printer or to the 3D printer data processing software preferably is a setting value of the discharge amount at a point, on the calibration curve, at which the density of the reference three-dimensional shaped samples becomes 95-100% with respect to the density (g/cm$^3$) of the filament. That is, in this embodiment, the three-dimensional molded article formation step involves the 3D printer receiving an input of a setting value for the discharge amount of the melted crystalline thermoplastic resin from a nozzle, or the 3D printer operating based on slice data generated by 3D printer data processing software to which a setting value for the discharge amount of the melted crystalline thermoplastic resin from a nozzle can be input, preparing a value of the density (g/cm$^3$) of the filament prior to forming the three-dimensional molded article, and preparing a calibration curve indicating the correlation between the setting values of the discharge amount and density (g/cm$^3$) in reference three-dimensional shaped samples for which the setting values of the discharge amount are known. The setting value of the discharge amount input to the 3D printer or to the 3D printer data processing software is a setting value of the discharge amount corresponding to a point, on the calibration curve, at which the density of the reference three-dimensional shaped samples becomes 95-100% with respect to the density (g/cm$^3$) of the filament. Due to the discharge amount setting value input to the 3D printer or to the 3D printer data processing software being a discharge amount setting value, on the calibration curve, at which the density becomes 95-100% with respect to the density (g/cm$^3$) of the filament, a three-dimensional molded article with excellent mechanical characteristics can be easily produced. In the obtained three-dimensional molded article, the formation of voids is suppressed.

(Calibration curve preparation step)

The method for producing a three-dimensional molded article according to another embodiment involves the 3D printer being configured so that a setting value for the filament diameter can be input, or the 3D printer being configured to operate based on slice data generated by 3D printer data processing software to which a setting value for the filament diameter can be input, preparing a value of the density (g/cm$^3$) of the filament prior to forming the three-dimensional molded article, and preparing a calibration curve indicating the correlation (hereinafter referred to simply as a "calibration curve") between the setting values of the filament diameter and density (g/cm$^3$) in reference three-dimensional shaped samples for which the setting values of the filament diameter are known (hereinafter, the feature of preparing a value of the density (g/cm$^3$) of the filament and the feature of preparing a calibration curve will also be referred to collectively as the "calibration curve preparation step"). The setting value of the filament diameter input to the 3D printer or to the 3D printer data processing software preferably is a setting value of the filament diameter at a point, on the calibration curve, at which the density of the reference three-dimensional shaped samples becomes 95-100% with respect to the density (g/cm$^3$) of the filament. That is, in this embodiment, the three-dimensional molded article formation step involves the 3D printer receiving an input of a setting value for the filament diameter, or the 3D printer operating based on slice data generated by 3D printer data processing software to which a setting value for the filament diameter can be input, preparing a value of the density (g/cm$^3$) of the filament prior to forming the three-dimensional molded article, and preparing a calibration curve indicating the correlation between the setting values of the filament diameter and density (g/cm$^3$) in reference three-dimensional shaped samples for which the setting values of the filament diameter are known, and the setting value of the filament diameter input to the 3D printer or to the 3D printer data processing software is a setting value of the filament diameter corresponding to a point, on the calibration curve, at which the density of the reference three-dimensional shaped samples become 95-100% with respect to the density (g/cm$^3$) of the filament. Due to the filament diameter setting value input to the 3D printer or to the 3D printer data processing software being a filament diameter setting value, on the calibration curve, at which the density becomes 95-100% with respect to the density (g/cm$^3$) of the filament, a three-dimensional molded article with excellent mechanical characteristics can be easily produced. In the obtained three-dimensional molded article, the formation of voids is suppressed.

The calibration curve preparation step need only be before the three-dimensional molded article formation step, and may be before or after the filament preparation step. The filament density (g/cm$^3$) and the calibration curve may be prepared by being measured or generated each time, or may be prepared as a filament density (g/cm$^3$) that has been measured in advance and as a calibration curve that has been generated in advance. The filament density (g/cm$^3$) and the calibration curve are preferably measured or generated each time the composition of the filament and/or the model of the 3D printer changes.

The density (g/cm$^3$) of the filament is a value measured by the following method, which is generally referred to as the water displacement method or as the Archimedean method. For a filament fragment that is 5 cm long, the weight in air is first measured. Next, the weight of the filament fragment is measured in a state of complete immersion in water. Since the difference between the weight in air and the weight in water indicates the buoyancy in water, the substantial volume of the filament is calculated. From the weight in air and the substantial volume obtained in this way, the density of the filament piece is calculated.

The calibration curve can be generated by the following method, using an example of the case in which the filament diameter is to be the setting value that is to be changed. First, reference three-dimensional samples are prepared, for which the setting values for the filament diameter in a 3D printer are known. For example, three each of three types of reference three-dimensional shaped samples with dimensions of 80 mm × 10 mm × 4 mm thickness are produced, using a filament having the same composition as a three-dimensional molded article to be obtained, with the filament diameter setting value in the 3D printer being set to 1.55 mm, 1.65 mm, or 1.75 mm. Next, the densities of three each of the three types of reference three-dimensional shaped samples are respectively measured by the water displacement method, and the arithmetic mean values thereof are defined as the densities (g/cm³) of the respective reference three-dimensional shaped samples. A calibration curve can be generated from an approximation line for a plot with the obtained densities (g/cm³) on the vertical axis and the filament diameter setting values (1.55 mm, 1.65 mm, or 1.75 mm) on the horizontal axis. In the case in which a linear approximation cannot be made, the setting values are adjusted so that a linear approximation can be made, and the shaping and the density evaluation are performed again.

The filament diameter setting value at a point, on the calibration curve, at which the density becomes 95-100% with respect to the density (g/cm³) of the filament is used as the filament diameter setting value input to the 3D printer (or to the 3D printer data processing software). **In** one embodiment, the value, on the calibration curve, at which the density becomes 95-100% with respect to the density (g/cm³) of the filament may be a value smaller than the mean filament diameter of the filament used.

(3D printer)

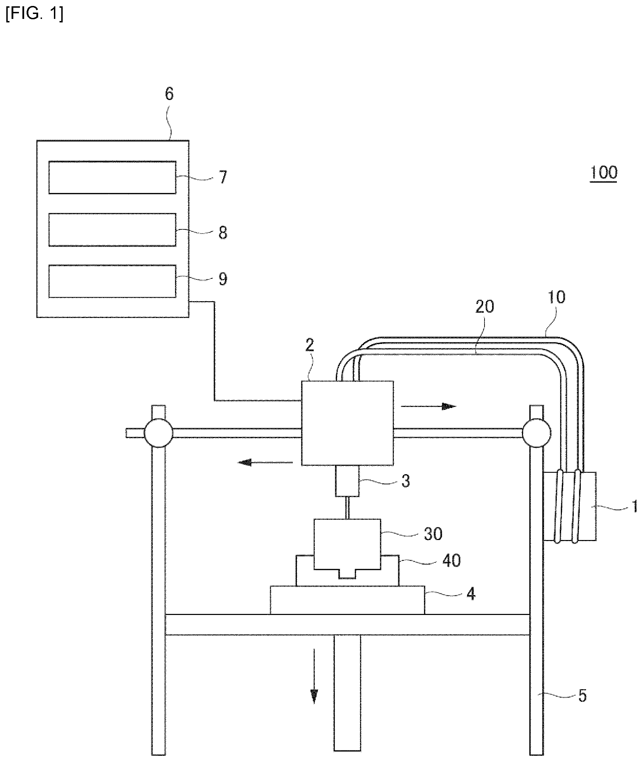

FIG. 1 illustrates an example of one configuration of a 3D printer that receives inputs of setting values for the filament diameter and setting values for the discharge amount from a nozzle. The configuration of the 3D printer is not limited to the configuration illustrated in FIG. 1. The 3D printer may be configured so as to receive either one of a setting value of the filament diameter and a setting value of the discharge amount from a nozzle.

The 3D printer 100 illustrated in FIG. 1 is provided with a filament supply portion 1 in which a filament is set, a filament melting portion 2 for melting the filament, a nozzle 3, a molding stage 4, a casing 5, and a control unit 6 that controls the scanning area of the nozzle 3 and the discharge amount of the melted filament 10 from the nozzle 3.

The filament supply portion 1 is configured to be able to set the filament 10 for forming the three-dimensional molded article and an auxiliary filament 20 for forming an auxiliary member 40 for supporting the three-dimensional molded article 30 as needed. The filament melting portion 2 is provided so as to be integrated with the nozzle 3, and is provided with heating means, which are not illustrated. The nozzle 3 is provided so as to be able to scan over the molding stage 4, and discharges the melted filament 10 from a discharge port on the tip thereof. The molding stage 4 is formed on a pedestal with an adjustable height.

The control unit 6 is connected to the filament melting portion 2, and is provided with a first input unit 7 for inputting three-dimensional data, a second input unit 8 for inputting setting values for the filament diameter, and a third input unit 9 for inputting setting values for the discharge amount from the nozzle. In another embodiment, the control unit 6 may be provided so as to be integrated with the nozzle 3, as with the filament melting portion 2. The control unit 6 controls the scanning area of the nozzle 3 based on three-dimensional data, and also controls the discharge amount of the melted filament 10 from the nozzle 3 based on the filament diameter setting value or the discharge amount setting value. In the case in which the discharge amount of the melted filament 10 from the nozzle 3 is controlled based on the filament diameter setting value, the control unit 6 controls the discharge amount of the melted filament 10 to become larger as the filament diameter setting value becomes smaller. The filament diameter setting value and the discharge amount setting value are as explained above. The control of the discharge amount of the melted filament 10 in the control unit 6 can also be implemented by 3D printer data processing software. In one embodiment, the 3D printer 100 may be configured to operate based on slice data generated by 3D printer data processing software to which a filament diameter setting value and/or a discharge amount setting value can be input.

In one embodiment, the inner diameter of the nozzle is not limited and may be, for example, 0.1-1 mm, or may be 0.2-0.6 mm.

In one embodiment, the drawing rate of the melted filament is an amount determined by the control unit and may be, for example, 5-100 mm/s, or may be 10-60 mm/s.

In one embodiment, the 3D printer may be provided with an air duct, near the nozzle, for spraying air in order to cool and solidify the shaped material after being deposited.

(Three-dimensional shaping)

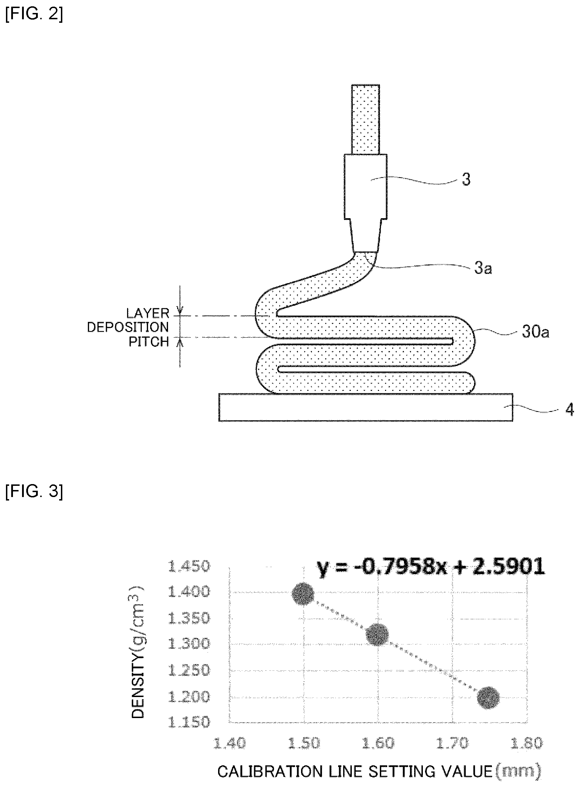

The method for producing the three-dimensional molded article by fused filament fabrication using a 3D printer will be described with reference to FIG. 1 and 2. A filament 10 including the crystalline thermoplastic resin is set in the filament supply portion 1 of the 3D printer 100. Three-dimensional data is input to the first input unit 7 provided in the 3D printer, and a setting value for the filament diameter is input to the second input unit 8 and/or a setting value for the discharge amount from the nozzle is input to the third input unit 9. The filament diameter setting value and the discharge amount setting value are as described above. By optimizing the filament diameter setting value and/or the discharge amount setting value, a three-dimensional molded article with excellent mechanical characteristics can be easily fabricated. Additionally, a three-dimensional molded article with a low void ratio can be fabricated.

The control unit 6 determines the scanning area of the nozzle 3 based on the three-dimensional data, and determines the discharge amount of the melted filament from the nozzle 3 based on the filament diameter setting value and/or the discharge amount setting value.

When the 3D printer 100 is operated, the filament 10 is supplied to the filament melting portion 2 and melted, and discharged from a discharge port 3a of the nozzle 3 onto the molding stage 4 in a discharge amount based on an output from the control unit 6. By discharging the melted filament 10 while causing the nozzle 3 to scan over the molding stage 4, the lowermost layer (ground layer), in which shaping lines 30a composed of the melted filament 10 are collected, is formed. By repeatedly reversing the scanning direction of the nozzle 3 and further discharging the melted filament 10, a three-dimensional molded article 30 in which shaping lines 30a are sequentially deposited in layers on the lowermost layer is fabricated. The layer deposition pitch is not limited and may be 0.05-0.4 mm, or may be 0.1-0.2 mm.

By better forming the lowermost layer (ground layer), the layered structure constituting the three-dimensional molded article 30 can be easily fixed to the molding stage 4 through the shaping process. In order to better form the lowermost layer, aside from leveling adjustment of the molding stage 4, the distance between the tip of the nozzle 3 and the surface of the molding stage 4 at the time of formation of the lowermost layer should preferably be controlled. The distance between the tip of the nozzle 3 and the molding stage 4 at the time of formation of the lowermost layer should preferably be 50 $\mu$m or more and 200 $\mu$m or less, and the optimal value should preferably be investigated in advance so that, when actually forming the lowermost layer, the shaping lines 30a do not separate from the molding stage 4 and excess discharged material is not deposited in the peripheral portions of the lowermost layer.

In cases in which the ground-contacting surface (the surface contacting the molding stage 4) of the fabricated three-dimensional molded article 30 is small, or in cases in which the height is large, the shaping of an auxiliary member 40 for supporting the three-dimensional molded article 30 can be performed prior to shaping the three-dimensional molded article 30. When shaping the auxiliary member 40, a filament 10 and an auxiliary filament 20 are set in the filament supply portion 1. Before shaping with the filament 10, the auxiliary filament 20 is supplied to the filament melting portion 2 and melted, then discharged onto the molding stage to form the auxiliary member 40. Thereafter, the three-dimensional molded article 30 is fabricated by discharging the melted filament 10 onto the auxiliary member 40.

In one embodiment, forming the three-dimensional molded article preferably involves forming the three-dimensional molded article on the molding stage under the temperature conditions indicated by Formula 1 below:

$$Tm2 > Ts \geq Tc \text{ and } Tc > Ta > Tc - 100 \qquad \text{(Formula 1)}$$

[in Formula 1, Ts represents the temperature (°C) of the molding stage, Tc represents the crystallization temperature (°C) of the filament, Tm2 represents the melting point (°C) of the filament, and Ta represents the air temperature (°C) in the shaping area] (hereinafter also referred to as the "first temperature adjustment step").

The first step is followed by separating the three-dimensional molded article from the surface of the molding stage under the temperature conditions indicated by Formula 2 below:

$$Tc > Ts \qquad \text{(Formula 2)}$$

[In Formula 2, Ts and Tc are the same as in Formula 1] (hereinafter also referred to as the "second temperature adjustment step").

The "shaping area" refers to the space on the molding stage in which the three-dimensional molded article can be formed. In the first embodiment, the shaping area is preferably in the form of a chamber forming a sealed space in order to facilitate temperature adjustment.

Although the air temperature (Ta) in the shaping area and the molding stage temperature (Ts) can be adjusted by raising or lowering settings in a fused filament fabrication-type 3D printer, the air temperature (Ta) in the shaping area and the molding stage temperature (Ts) both refer not to the temperatures that are the setting values for 3D printer operations, but rather to actual measurement values of the molding stage temperature and the air temperature in the shaping area with respect to certain set conditions.

The method for measuring the filament melting point Tm2 and the crystallization temperature Tc are as described regarding the filament above.

In the first temperature adjustment step, by setting the various temperatures at the time of layer deposition of the filament to be within the ranges defined in Formula 1, warping of the deposited material as the temperature decreases at the time of layer deposition can be suppressed and the deposited material can be firmly fixed to the molding stage, thereby facilitating the shaping of the three-dimensional molded article. In the second temperature adjustment step, by setting the temperature of the molding stage after shaping to be within the range defined in Formula 2, the three-dimensional molded article can be easily separated from the molding stage.

In one embodiment, for example, when the melting temperature Tm2 of the crystalline thermoplastic resin is 162 °C and the crystallization temperature Tc is 140 °C, the temperature of the molding stage in the first temperature adjustment step is preferably set to be 140 °C or higher and lower than 162 °C, and the air temperature in the shaping area is preferably set to be higher than 40 °C and lower than 140 °C.

In the second temperature adjustment step, by making the temperature of the molding stage lower than the crystallization temperature of the filament after the formation of the three-dimensional molded article, crystallization progresses in the lowermost layer (ground layer) and the adhesive force with respect to the molding stage of the lowermost layer is reduced, thereby allowing the three-dimensional molded article to be easily separated from the molding stage.

In the first embodiment, for example, when the crystallization temperature Tc of the crystalline thermoplastic resin is 140 °C, the temperature of the molding stage is preferably lowered to below 140 °C after the three-dimensional molded article has been formed. The lowermost layer (ground layer) may be removed by being cut, polished, etc. as needed.

## EXAMPLES

Hereinafter, the present invention will be explained in further detail by indicating examples. However, the present invention is not to be construed in a limited manner based on these examples.

[Production Example 1] (Filament (i) preparation step)

A POM resin (polyacetal resin, manufactured by Polyplastics Co., Ltd., DURACON® POM FP-15X) was used to prepare a filament (i) with a mean filament diameter of 1.75 mm, as indicated below. The method for measuring the mean filament diameter will be explained below.

POM resin pellets were loaded into a tabletop extruder (Apex Japan, AS-1) and extruded with a barrel temperature of 200 °C and a screw rate of 40 rpm. An extruded strand was cooled and solidified by means of water, then wound with a filament winder (Filabot, Spooler) at a winding speed such that the filament diameter became 1.75 mm ± 0.1 mm, thereby obtaining a filament comprising the POM resin.

[Production Example 2] (Filament (ii) preparation step)

A filament (ii) with a mean filament diameter of 1.75 mm was fabricated in the same manner as Production Example 1, other than having used DURACON® POM KT-10H, manufactured by Polyplastics Co., Ltd., as the POM resin (polyacetal resin). The method for measuring the mean filament diameter was as indicated below.

(Measurement of mean filament diameter)

5 m of sample material were taken from the obtained filaments (i) and (ii), 20 locations were randomly selected, and the diameters at those locations were measured to the third decimal point using a micrometer (manufactured by Mitutoyo Corp., product name ABSOLUTE). Next, the mean value thereof was rounded off to the third decimal point and defined as the mean filament diameter.

[Example 1]

The filament (i) was used to fabricate a three-dimensional molded article as indicated below.

(Calibration curve preparation step)

Upon measuring the value of the density (g/cm$^3$) of the filament (i) in the manner indicated below, the density was 1.41 g/cm$^3$.

The density of the filament was measured by the water displacement method using an electronic densimeter (Alfa Mirage, SD-200L). Specifically, the weight of a filament piece with a length of 5 cm was measured in air. Next, the weight of the filament piece was measured in a state of complete immersion in water. As a result thereof, the density of the filament was automatically calculated by an electronic densimeter program.

A calibration curve indicating the correlation between setting values and density (g/cm$^3$) in reference three-dimensional shaped samples was prepared.

A prepared filament (i) was set in a fused filament fabrication-type 3D printer (manufactured by INTAMSYS, product name FUNMAT HT Enhanced), the value 1.75 mm, 1.65 mm, or 1.55 mm was input as the filament diameter setting value, and three types of reference three-dimensional shaped samples (i-1) to (i-3) having dimensions of 80 mm × 40 mm × 10 mm thickness were respectively shaped. The inner diameter of the nozzle for discharging the filament was 0.4 mm, the layer deposition pitch was 0.2 mm, and the drawing rate was 30 mm/s. The temperature of the nozzle was set to be 210 °C, the temperature (Ts) of the molding stage was set to be 155 °C, the air temperature in the shaping area was set to be 94 °C, and the molding stage temperature was lowered to 100 °C after the three-dimensional molded article was formed.

The densities (g/cm$^3$) of the obtained reference three-dimensional shaped samples (i-1) to (i-3) were measured five times as indicated below. Upon determining the arithmetic mean values thereof, they were, respectively, 1.19742 g/cm$^3$ (filament diameter setting value: 1.75 mm), 1.31684 g/cm$^3$ (filament diameter setting value: 1.65 mm), and 1.39636 g/cm$^3$ (filament diameter setting value: 1.55 mm).

**The** densities of the three-dimensional shaped samples, like the density of the filament, were measured by the water displacement method using an electronic densimeter (Alfa Mirage, SD-200L). **The** specifics are the same as those mentioned above and will therefore be omitted.

The obtained values were used to generate a calibration curve indicating the correlation between the filament diameters and density (g/cm$^3$) in the reference three-dimensional shaped samples (i-1) to (i-3). The results are indicated in FIG. 3. In FIG. 3, the horizontal axis indicates known setting values (calibration curve setting values) and the vertical axis indicates density (g/cm$^3$). The approximation line was represented by y = -0.7958x + 2.5901.

The value "1.50 mm", which is the filament diameter setting value, on this calibration curve, at which the density value becomes 99% of the filament density value (1.41 g/cm$^3$), determined as described above, was used as the filament diameter setting value input to the 3D printer.

(Three-dimensional molded article formation step)

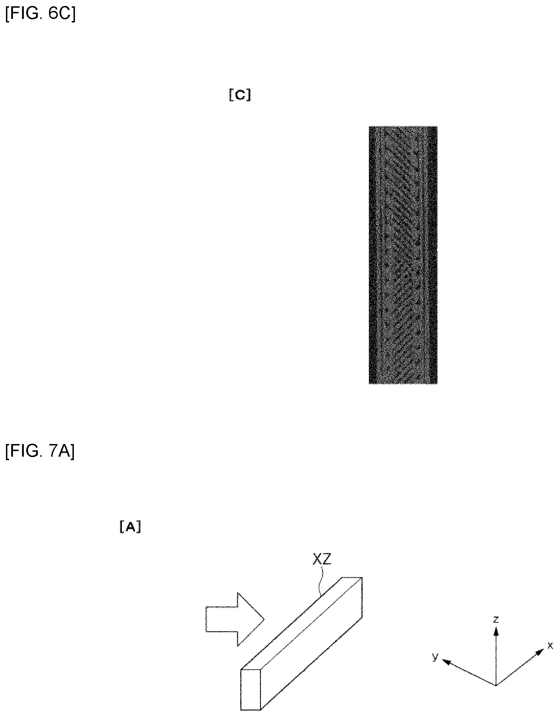

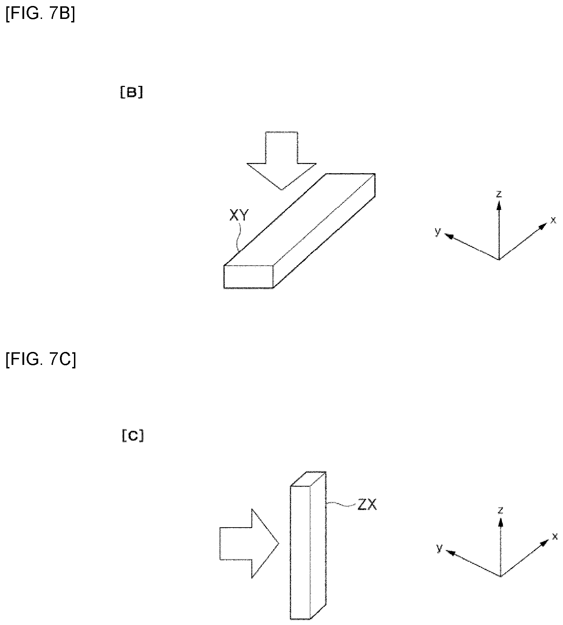

The prepared filament (i) was set in a fused filament fabrication-type 3D printer (manufactured by INTAMSYS, product name FUNMAT HT Enhanced), the value 1.50 mm determined from the above-mentioned calibration curve was input as the filament diameter setting value input to the 3D printer, and a three-dimensional molded article having dimensions of 80 mm length × 40 mm width × 10 mm thickness was shaped. This three-dimensional molded article did not have any intentionally formed spaces. When shaping the three-dimensional molded article, the layer deposition direction was changed to respectively shape three types of three-dimensional molded articles (XZ, XY, ZX) having the same dimensions (see FIG. 7). The three-dimensional molded article (XZ) was shaped with a face having two sides with the length 80 mm and the thickness 10 mm as the lowermost layer, and with the width direction (40 mm) as the layer deposition direction (see FIG. 7A). The three-dimensional molded article (XY) was shaped with a face having two sides with the length 80 mm and the width 40 mm as the lowermost layer, and with the thickness direction (10 mm) as the layer deposition direction (see FIG. 7B). The three-dimensional molded article (ZX) was shaped with a face having two sides with the width 40 mm and the thickness 10 mm as the lowermost layer, and with the length direction (80 mm) as the layer deposition direction (see FIG. 7C).

The inner diameter of the nozzle discharging the filament, the layer deposition pitch, the drawing rate, the nozzle temperature, the molding stage temperature (Ts), the air temperature in the shaping area, and the molding stage temperature after the three-dimensional molded article was formed were the same values as those when forming the reference three-dimensional shaped samples.

[Example 2]

(Calibration curve preparation step)

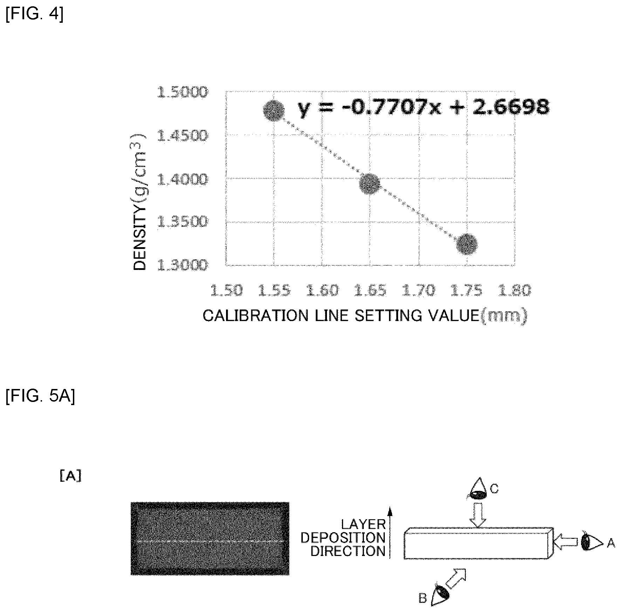

Upon measuring the value of the density (g/cm$^3$) of the filament (ii) by the same method as that in Example 1, the density was 1.48 g/cm$^3$. Upon fabricating reference three-dimensional shaped samples by the same method as Example 1, then measuring the densities of the respective three-dimensional shaped samples five times by the same method as Example 1 and determining the arithmetic mean values, they were, respectively, 1.3234 g/cm$^3$ (filament diameter setting value: 1.75 mm), 1.3935 g/cm$^3$ (filament diameter setting value: 1.65 mm), and 1.4775 g/cm$^3$ (filament diameter setting value: 1.55 mm). From the obtained values, a calibration curve indicating the correlation between the setting values and density (g/cm$^3$) was generated. The results are indicated in FIG. 4. In FIG. 4, the horizontal axis indicates known setting values (calibration curve setting values) and the vertical axis indicates density (g/cm$^3$). The approximation line was represented by y = -0.7707x + 2.6698.

The value "1.57 mm", which is the setting value, on this calibration curve, at which the density value becomes 99% of the filament density value (1.48 g/cm$^3$), determined as described above, was used as the filament diameter setting value input to the 3D printer.

(Three-dimensional molded article formation step)

Three types of three-dimensional molded articles (XZ, XY, ZX) having dimensions of 80 mm length × 40 mm width × 10 mm thickness with different layer deposition directions were respectively shaped by the same method as that in Example 1 aside from using the filament (ii) instead of the filament (i) and inputting 1.57 mm, which was determined from the above-mentioned calibration curve, as the filament diameter setting value to be input to the 3D printer. The layer deposition directions of the three-dimensional molded articles (XZ, XY, ZX) were the same as those in Example 1.

[Comparative Example 1]

Three types of three-dimensional molded articles (XZ, XY, ZX) having dimensions of 80 mm length × 40 mm width × 10 mm thickness with different layer deposition directions were respectively shaped by the same method as that in Example 1 aside from not generating a calibration curve and using, as the filament diameter setting value input to the 3D printer, a value equal to the mean filament diameter (actual measurement value: 1.75 mm) of the filament (i). The layer deposition directions of the three-dimensional molded articles (XZ, XY, ZX) were the same as those in Example 1.

[Measurement and evaluation]

(CT scan by X-rays)

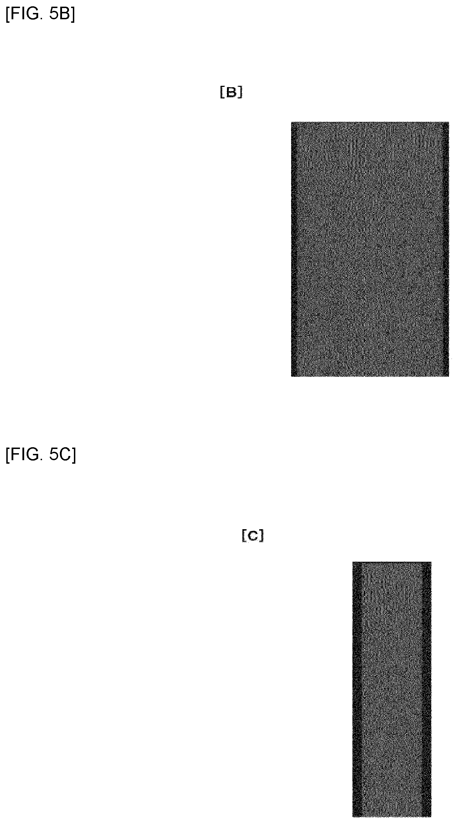

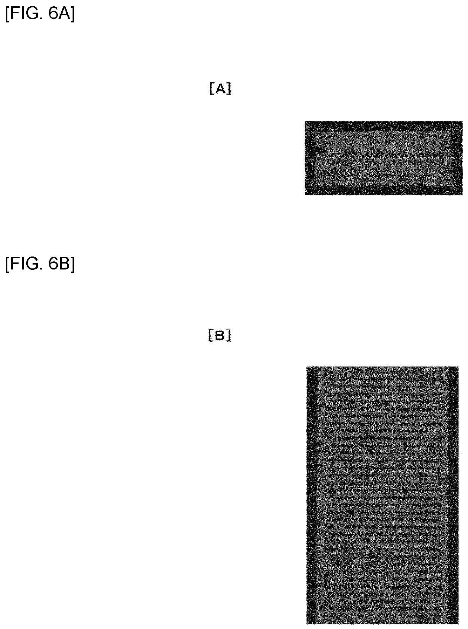

The three-dimensional molded articles XZ obtained respectively in Example 1 and Comparative Example 1 were subjected to CT scans using X-rays, with respective central portions as the fields of view. For imaging using X-rays, an X-ray CT scanner "ScanXmate-D090SS270" manufactured by Comscantecno Co., Ltd. was used. The results are shown in FIG. 5 and 6. FIG. 5A and FIG. 6A are portions of the cross-sectional data of the 10 mm × 4 mm face along the layer deposition direction (cross-sectional data observed from a lateral side of the three-dimensional molded article). FIG. 5B and FIG. 6B are portions of the cross-sectional data of the 80 mm × 40 mm face along the layer deposition direction (cross-sectional data observed from the front side of the three-dimensional molded article) in a cross-section cut at the center (indicated by the dashed line in FIG. 5A and FIG. 6A, and indicated by the solid line near the center in FIG. 5C and FIG. 6C), in the width direction, of the 10 mm × 4 mm face. FIG. 5C and FIG. 6C are portions of the cross-sectional data of the 80 mm × 10 mm face perpendicular to the layer deposition direction (cross-sectional data observed from the upper side of the three-dimensional molded article).
As shown in FIG. 5A to FIG. 5C, the three-dimensional molded article obtained in Example 1 has few voids in the cross-sectional data in all directions, i.e., in plan view, front view, and side view. The three-dimensional molded article obtained in Example 1 has few voids in both the direction along the layer deposition direction and the direction perpendicular to the layer deposition direction.
In contrast therewith, as shown in FIG. 6A to FIG. 6C, the three-dimensional molded article obtained in Comparative Example 1 had defects (spaces) between adjacent drawing lines and there were many voids.

(Measurement of void ratio)

For arbitrary 10 mm × 10 mm regions in FIG. 5A to 5C, image processing software (manufactured by White Rabbit Corp., "Molcer Plus") was used to measure the area of regions in which the brightness value was -400 to 1000 as the area of regions in which the resin was present and to measure the area of regions in which the brightness values was -1000 to -800 as the area of regions in which voids were present. From the obtained values, the ratio $[A_{void}/A_{resin}]$ (%) of the area of regions in which voids were present to the area of regions in which resin components were present was calculated. $[A_{void}/A_{resin}]$ (%) was similarly calculated for FIG. 6A to 6C. The results are indicated in Table 1.

[Table 1]

|  | EX. 1 (FIG. 5) | | | COMP. EX. 1 (FIG. 6) | | |
| --- | --- | --- | --- | --- | --- | --- |
|  | A | B | C | A | B | C |
| $[A_{void}/A_{resin}] \times 100$ (%) | 1 | 1 | 1 | 15 | 15 | 15 |

(Bending test)

Five each of the three-dimensional molded articles XZ, XY, and ZX obtained in the examples and in the comparative examples were prepared, the flexural strengths and flexural moduli were measured in accordance with ISO178, and the arithmetic mean values thereof were defined as the flexural strengths and the flexural moduli of the three-dimensional molded articles XZ, XY, and ZX. FIG. 7A to C indicate the layer deposition directions of the three-dimensional molded articles and the bending test performance directions. FIG. 7A to C show arrows indicating mutually orthogonal directions x, y, and z. The x direction and the y direction are directions parallel to the horizontal surface of the molding stage of the 3D printer and correspond to the width directions of the three-dimensional molded articles. The z direction is the direction opposing the direction of gravity, and correspond to the layer deposition direction of the melted filament. In FIG.

7A to C, the black arrows indicate the layer deposition directions and the white arrows indicate the directions in which loads were applied.

As illustrated in FIG. 7A to C, in each of the three-dimensional molded articles that were 80 mm × 10 mm × 4 mm thickness, bending tests were performed by applying loads from directions perpendicular to the 80 mm × 10 mm face. The results are indicated in Table 2.

As a reference example, an injection-molded article with dimensions of 80 mm × 10 mm × 4 mm thickness was fabricated under the conditions below, and the flexural strength and flexural modulus were measured in accordance with ISO178. The results are indicated in Table 2.

<Injection molding conditions>

Material drying temperature and time: 80 °C × 3 hours or more

Cylinder temperature: 205 °C

Mold temperature: 90 °C

Maintained pressure: 70 MPa

Injection rate: 13 mm/s

[Table 2]

| | | FLEXURAL STRENGTH (MPa) | FLEXURAL MODULUS (MPa) |
|---|---|---|---|
| INJECTION-MOLDED ARTICLE | | 73 | 2020 |
| EXAMPLE | XZ | 75 | 2030 |
| | XY | 75 | 2070 |
| | ZX | 63 | 1760 |
| COMPARATIVE EXAMPLE 1 | XZ | 64 | 1730 |
| | XY | 64 | 1760 |
| | ZX | 54 | 1500 |

As indicated in Table 2, the three-dimensional molded articles XZ, XY, and ZX of Example 1, when compared respectively with the three-dimensional molded articles XZ, XY, and ZX of Comparative Example 1, all had high flexural strengths and flexural moduli as measured in accordance with ISO178, and had excellent mechanical characteristics. The three-dimensional molded articles XZ, XY, and ZX of Example 1 were able to achieve flexural strengths and flexural moduli that were 85% or more of those of injection-molded articles. The three-dimensional molded articles XZ and XY had flexural strengths and flexural moduli that were higher values than those of injection-molded articles.

INDUSTRIAL APPLICABILITY

The three-dimensional molded article disclosed herein has excellent mechanical characteristics such as bending properties, and can be used in various applications, such as in component prototypes, making use of spring characteristics, thus having industrial applicability.

REFERENCE SIGNS LIST

100    3D printer
1    Filament supply portion
2    Filament melting portion

3     Nozzle
4     Shaping stage
5     Casing
10    Filament
20    Auxiliary filament
30    Three-dimensional molded article
40    Auxiliary member
6     Control unit
7     First input unit
8     Second input unit
9     Third input unit

**Claims**

1. A three-dimensional molded article obtained by fused filament fabrication with a filament containing a crystalline thermoplastic resin, wherein:
   a void ratio in the three-dimensional molded article is 5% or less, where the void ratio is represented by a value obtained by performing image analysis of a 10 mm × 10 mm region, in one direction, of cross-sectional data obtained by performing a CT scan, by X-rays, on all or a portion of the three-dimensional molded article to measure an area ($A_{resin}$) of regions in which a resin component is present and an area ($A_{void}$) of regions in which voids are present, and calculating a ratio [$A_{void}/A_{resin}$] (%) of the area of the regions in which voids are present to the area of the regions in which the resin component is present, or by a value obtained by performing data analysis of a 10 mm × 10 mm × 10 mm region in spatial data obtained by performing a CT scan, by X-rays, on all or a portion of the three-dimensional molded article to measure a volume ($V_{resin}$) of regions in which the resin component is present and a volume ($V_{void}$) of regions in which voids are present, and calculating a ratio [$V_{void}/V_{resin}$] (%) of the volume of the regions in which voids are present to the volume of the regions in which the resin component is present.

2. The three-dimensional molded article according to claim 1, wherein the void ratio in the three-dimensional molded article is 2% or less.

3. The three-dimensional molded article according to claim 1 or 2, wherein the crystalline thermoplastic resin includes one or more resins selected from the group consisting of polyacetal resins, polyethylene resins, polypropylene resins, polyethylene terephthalate resins, polybutylene terephthalate resins, and polyamide resins.

4. The three-dimensional molded article according to claim 1 or 2, wherein the three-dimensional molded article contains an inorganic or organic filler.

5. A method for producing the three-dimensional molded article according to claim 1, the method comprising:
   forming the three-dimensional molded article by using a 3D printer to deposit layers of a filament containing a crystalline thermoplastic resin by fused filament fabrication.

6. The method for producing the three-dimensional molded article according to claim 5, wherein:

   forming the three-dimensional molded article involves
   the 3D printer receiving an input of a setting value for a discharge amount of the melted crystalline thermoplastic resin from a nozzle, or
   the 3D printer operating based on slice data generated by 3D printer data processing software to which a setting value for a discharge amount of the melted crystalline thermoplastic resin from a nozzle can be input; and
   the setting value of the discharge amount input to the 3D printer or to the 3D printer data processing software is a value greater than 100%.

7. The method for producing the three-dimensional molded article according to claim 5 or 6, wherein:

   forming the three-dimensional molded article involves
   the 3D printer receiving an input of a setting value for a filament diameter, or
   the 3D printer operating based on slice data generated by 3D printer data processing software to which a setting value for a filament diameter can be input; and
   the setting value of the filament diameter input to the 3D printer or to the 3D printer data processing software is a

19

value smaller than a mean filament diameter of the filament.

8. The method for producing the three-dimensional molded article according to claim 5 or 6, wherein:

forming the three-dimensional molded article involves
the 3D printer receiving an input of a setting value for a discharge amount of the melted crystalline thermoplastic resin from a nozzle, or
the 3D printer operating based on slice data generated by 3D printer data processing software to which a setting value for a discharge amount of the melted crystalline thermoplastic resin from a nozzle can be input, and
preparing a value of a density $(g/cm^3)$ of the filament prior to forming the three-dimensional molded article, and preparing a calibration curve indicating a correlation between setting values of the discharge amount and density $(g/cm^3)$ in reference three-dimensional shaped samples for which setting values of the discharge amount are known; and
the setting value of the discharge amount input to the 3D printer or to the 3D printer data processing software is a setting value of the discharge amount corresponding to a point, on the calibration curve, at which the density of the reference three-dimensional shaped samples becomes 95-100% with respect to the density $(g/cm^3)$ of the filament.

9. The method for producing the three-dimensional molded article according to claim 5 or 6, wherein:

forming the three-dimensional molded article involves
the 3D printer receiving an input of a setting value for a filament diameter, or
the 3D printer operating based on slice data generated by 3D printer data processing software to which a setting value for a filament diameter can be input, and
preparing a value of a density $(g/cm^3)$ of the filament prior to forming the three-dimensional molded article, and preparing a calibration curve indicating a correlation between setting values of the filament diameter and density $(g/cm^3)$ in reference three-dimensional shaped samples for which setting values of the filament diameter are known; and
the setting value of the filament diameter input to the 3D printer or to the 3D printer data processing software is a setting value of the filament diameter corresponding to a point, on the calibration curve, at which the density of the reference three-dimensional shaped samples becomes 95-100% with respect to the density $(g/cm^3)$ of the filament.

[FIG. 1]

[FIG. 2]

[FIG. 3]

$$y = -0.7958x + 2.5901$$

[FIG. 4]

$$y = -0.7707x + 2.6698$$

[FIG. 5A]

[A]

LAYER DEPOSITION DIRECTION

[FIG. 5B]

[B]

[FIG. 5C]

[C]

[FIG. 6A]

[A]

[FIG. 6B]

[B]

[FIG. 6C]

[C]

[FIG. 7A]

[A]

XZ

z
y  x

[FIG. 7B]

[B]

[FIG. 7C]

[C]

## INTERNATIONAL SEARCH REPORT

| International application No. |
|---|
| **PCT/JP2023/034288** |

| A. | CLASSIFICATION OF SUBJECT MATTER |
|---|---|

*B29C 64/118*(2017.01)i; *B29C 64/321*(2017.01)i; *B29C 64/343*(2017.01)i; *B29C 64/393*(2017.01)i; *B33Y 10/00*(2015.01)i; *B33Y 50/02*(2015.01)i; *B33Y 70/00*(2020.01)i; *B33Y 70/10*(2020.01)i; *B33Y 80/00*(2015.01)i
FI:  B29C64/118; B29C64/321; B29C64/343; B29C64/393; B33Y10/00; B33Y50/02; B33Y70/00; B33Y70/10; B33Y80/00

According to International Patent Classification (IPC) or to both national classification and IPC

| B. | FIELDS SEARCHED |
|---|---|

Minimum documentation searched (classification system followed by classification symbols)

B29C64/00-64/40; B22F1/00-12/90; B28B1/30; B33Y10/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2020-506090 A (IMERYS TALC AMERICA INC) 27 February 2020 (2020-02-27) paragraphs [0123], [0126], [0130], table 4 | 1-5 |
| Y | | 6 |
| Y | CN 113183455 A (JF POLYMERS (SUZHOU) CO., LTD.) 30 July 2021 (2021-07-30) paragraph [0134] | 6 |
| A | JP 2019-188757 A (SEIKO EPSON CORP) 31 October 2019 (2019-10-31) entire text, all drawings | 1-9 |
| A | WO 2017/094791 A1 (RICOH CO LTD) 08 June 2017 (2017-06-08) entire text, all drawings | 1-9 |
| A | JP 2017-114114 A (THE BOEING COMPANY) 29 June 2017 (2017-06-29) entire text, all drawings | 1-9 |
| A | JP 2019-025759 A (KONICA MINOLTA INC) 21 February 2019 (2019-02-21) entire text, all drawings | 1-9 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 November 2023** | **12 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/034288**

**C.    DOCUMENTS CONSIDERED TO BE RELEVANT**

| Category* | Citation of document, with indication, where appropriate, of the relevant passages | Relevant to claim No. |
|---|---|---|
| A | JP 2019-025761 A (KONICA MINOLTA INC) 21 February 2019 (2019-02-21)<br>entire text, all drawings | 1-9 |
| A | WO 2022/050953 A1 (JABIL INC.) 10 March 2022 (2022-03-10)<br>entire text, all drawings | 1-9 |

Form PCT/ISA/210 (second sheet) (January 2015)

# EP 4 592 058 A1

## INTERNATIONAL SEARCH REPORT
### Information on patent family members

| International application No. |
| --- |
| **PCT/JP2023/034288** |

| Patent document cited in search report | | | Publication date (day/month/year) | Patent family member(s) | | | Publication date (day/month/year) |
| --- | --- | --- | --- | --- | --- | --- | --- |
| JP | 2020-506090 | A | 27 February 2020 | US 2020/0231794 A1 paragraphs [0144], [0146], [0148], table 4<br>WO 2018/144141 A1<br>KR 10-2019-0107737 A<br>CN 110520273 A | | | |
| CN | 113183455 | A | 30 July 2021 | WO 2022/227790 A1 | | | |
| JP | 2019-188757 | A | 31 October 2019 | US 2019/0329495 A1 entire text, all drawings<br>CN 110406098 A | | | |
| WO | 2017/094791 | A1 | 08 June 2017 | US 2018/0264742 A1 entire text, all drawings<br>EP 3385061 A1 | | | |
| JP | 2017-114114 | A | 29 June 2017 | US 2017/0136703 A1 entire text, all drawings<br>EP 3182307 A1<br>CA 2936643 A1 | | | |
| JP | 2019-025759 | A | 21 February 2019 | (Family: none) | | | |
| JP | 2019-025761 | A | 21 February 2019 | (Family: none) | | | |
| WO | 2022/050953 | A1 | 10 March 2022 | US 2022/0227060 A1 entire text, all drawings<br>US 2022/0072794 A1<br>CN 116234679 A<br>KR 10-2023-0059781 A | | | |

Form PCT/ISA/210 (patent family annex) (January 2015)

**EP 4 592 058 A1**

## REFERENCES CITED IN THE DESCRIPTION

### Patent documents cited in the description

- JP 2021172084 A

- JP 2019131762 A